(19) Europäisches Patentamt
European Patent Office
Office européen des brevets

(11) **EP 1 789 860 B1**

## (12) EUROPÄISCHE PATENTSCHRIFT

(45) Veröffentlichungstag und Bekanntmachung des Hinweises auf die Patenterteilung:
**14.05.2008 Patentblatt 2008/20**

(21) Anmeldenummer: 05758680.2

(22) Anmeldetag: **23.06.2005**

(51) Int Cl.:
*G05B 19/404* $^{(2006.01)}$

(86) Internationale Anmeldenummer:
**PCT/EP2005/006783**

(87) Internationale Veröffentlichungsnummer:
**WO 2006/029662 (23.03.2006 Gazette 2006/12)**

(54) **VERFAHREN ZUR KOMPENSATION VON THERMISCHEN VERLAGERUNGEN**

METHOD FOR COMPENSATING THERMAL SHIFTS

PROCEDE DE COMPENSATION DE DEPHASAGES THERMIQUES

(84) Benannte Vertragsstaaten:
**CH DE ES IT LI PL**

(30) Priorität: **13.09.2004 DE 102004044838**

(43) Veröffentlichungstag der Anmeldung:
**30.05.2007 Patentblatt 2007/22**

(73) Patentinhaber: **Chiron-Werke GmbH & Co. KG
78532 Tuttlingen (DE)**

(72) Erfinder:
• **PRUST, Dirk
78532 Tuttlingen (DE)**

• **WINKLER, Hans-Henning
78532 Tuttlingen (DE)**

(74) Vertreter: **Otten, Hajo et al
Witte, Weller & Partner
Patentanwälte,
Postfach 105462
70047 Stuttgart (DE)**

(56) Entgegenhaltungen:
**US-A1- 2004 066 831 US-B1- 6 269 284**

EP 1 789 860 B1

**Beschreibung**

Die vorliegende Erfindung betrifft ein Verfahren zur Kompensation von thermischen Verlagerungen bei einer Werkzeugmaschine mit einem Werkstücktisch zum Aufspannen von zu bearbeitenden Werkstücken und mit einer relativ zu dem Werkstücktisch in zumindest einer Achse verfahrbaren Werkzeugspindel, in die Werkzeuge einspannbar sind, mit denen an den Werkstücken ein Bearbeitungsprozess durchgeführt wird, wobei aus zumindest einem an einer Messstelle an der Werkzeugmaschine aktuell gemessenen Temperaturwert nach einer Rechenregel zumindest ein Korrekturwert für die zumindest eine Achse berechnet wird.

Ein derartiges Verfahren ist aus der DE 42 03 994 A1 bekannt.

Die Anforderungen an die Bearbeitungsgenauigkeit moderner Werkzeugmaschinen sind in den letzten Jahren immer weiter gestiegen, inzwischen werden für viele Anwendungen Bearbeitungsgenauigkeiten im Bereich von einigen $\mu$m gefordert. In einem derartigen Genauigkeitsbereich machen sich auch thermische Verlagerungen bemerkbar, denen eine Werkzeugmaschine beispielsweise durch Erwärmung einzelner Baugruppen unterworfen ist.

So ist es bekannt, dass eine Werkzeugmaschine mehrere Stunden benötigt, bis sie thermisch so eingeschwungen ist, dass bei einem immer wiederkehrenden Bearbeitungsprozess keine größeren thermischen Schwankungen und damit verbundene Verlagerungen mehr auftreten.

Um jetzt nicht nach jedem Einschalten einer betriebskalten Maschine, beispielsweise morgens zu Schichtbeginn, abwarten zu müssen, bis die jeweilige Werkzeugmaschine thermisch eingeschwungen ist, sind verschiedene Verfahren aus dem Stand der Technik bekannt, um entsprechende Korrekturwerte zu bestimmen, die bei den Positionieranweisungen in der Werkzeugmaschine berücksichtigt werden.

Auf diese Weise soll es möglich werden, mit einer noch kalten Werkzeugmaschine Werkstücke mit derselben oder einer vergleichbaren Genauigkeit bearbeiten zu können, wie mit einer thermisch eingeschwungenen Werkzeugmaschine.

In der eingangs erwähnten DE 42 03 994 A1 wird zu diesem Zweck vorgeschlagen, an verschiedenen Stellen einer Werkzeugmaschine Temperaturwerte zu messen und nach einer Rechenregel aus diesen Temperaturwerten Korrekturwerte zu bestimmen, mit denen die mit einem Messsystem erfassten Ist-Werte der relativen Position der Werkzeugspindel zu dem Werkstücktisch korrigiert werden. Mit anderen Worten, der von dem Messsystem gemessene Ist-Wert der Spindelposition wird um einen berechneten Fehlerwert korrigiert, der aus den gemessenen Temperaturen berechnet wird. Damit soll beispielsweise die wärmebedingte Dehnung eines Längenmassstabes ausgeglichen werden.

Zu diesem Zweck wird für den entsprechenden Maschinentyp die genannte Rechenregel entwickelt, die dann bei den einzelnen Bearbeitungsprozessen eingesetzt wird, um die Korrekturwerte für die entsprechenden Achsen zu bestimmen. Bei diesen Achsen kann es sich um die drei orthogonalen Achsen X, Y und Z sowie weiter um Schwenk- oder Drehachsen handeln.

Es hat sich nun herausgestellt, dass es auch mit einer großen Anzahl von Messstellen nicht möglich ist, eine hinreichend genaue Beschreibung des Temperaturverhaltens einer Werkzeugmaschine zu erhalten, so dass eine Kompensation mit der gewünschten Genauigkeit häufig nicht möglich ist.

Vor diesem Hintergrund wird zusätzlich zu der auf einer Temperaturmessung beruhenden Berechnung von Korrekturwerten oder alternativ dazu der Weg beschritten, die tatsächlichen Verlagerungen unmittelbar messtechnisch zu erfassen.

Ein diesbezügliches Verfahren ist in der US 5,581,467 beschrieben. Bei dem bekannten Verfahren wird ein Referenzpunkt zu dem Koordinatenursprung entweder auf dem Werkstücktisch oder an dem zu bearbeitenden Werkstück festgelegt und es werden Korrekturwerte ermittelt, mit deren Hilfe Fahranweisungen der Steuerung berechnet werden, die thermische Verlagerungen berücksichtigen.

Zu diesem Zweck wird in bestimmten Abständen die tatsächliche Lage des Referenzpunktes gemessen und daraus die aktuellen Korrekturwerte berechnet, die dann zur Korrektur verwendet werden. In Abhängigkeit von den Abweichungen der aktuell bestimmten Korrekturwerte zu den Korrekturwerten aus dem letzten Messvorgang wird die Häufigkeit, mit der die aktuelle Lage des Referenzpunktes messtechnisch erfasst wird, an den thermischen Zustand der Werkzeugmaschine angepasst. Auf diese Weise werden immer möglichst wenig Messungen durchgeführt, wenn die thermische Verlagerung im Rahmen vorgegebener Werte bleibt.

Aus der DE 42 38 504 A1 ist ein Verfahren bekannt, bei dem der Referenzpunkt durch eine Lichtschranke definiert wird. Die Lage der Lichtschranke und damit des Referenzpunktes wird relativ zu dem Ursprung des Koordinatensystems für die Bewegung der Werkzeugspindel dadurch bestimmt, dass ein Messwerkzeug mit definierter Länge der Lichtschranke zugestellt und die Unterbrechung der Lichtschranke erfasst wird. Aus der relativen Stellung der Werkzeugspindel wird die relative Lage des Referenzpunktes bezogen auf den Koordinatenursprung bestimmt.

Bei den in soweit bekannten Verfahren ist von Nachteil, dass es zumindest während der thermischen Einschwingphase relativ häufig durchgeführt werden muss, so dass sich die tatsächlich für die Bearbeitung eines Werkstückes zur Verfügung stehende Zeit reduziert. Bei kompliziert zu bearbeitenden Werkstücken ist es sogar bekannt, dass mehrmals während der Bearbeitung eines Werkstückes ein Messwerkzeug in die Werkzeugspindel eingesetzt und damit die aktuelle Lage des Referenzpunktes bestimmt wird.

Für eine derartige Bestimmung des Referenzpunktes benötigen bekannte Werkzeugmaschinen bis zu 10 Sekunden, so dass die bekannten Verfahren zur Kompensation von thermischen Verlagerung, bei denen die tatsächliche Verlagerung messtechnisch erfasst wird, den Werkstückdurchsatz deutlich reduzieren.

Vor diesem Hintergrund liegt der vorliegenden Erfindung die Aufgabe zugrunde, die Genauigkeit der Kompensation bei dem bekannten Verfahren zu verbessern ohne die Zeitnachteile in Kauf nehmen zu müssen, die mit der unmittelbaren messtechnischen Erfassung der tatsächlichen Verlagerung verbunden sind.

Erfindungsgemäß wird diese Aufgabe dadurch gelöst, dass eine auf den jeweiligen Bearbeitungsprozess abgestimmte Rechenregel verwendet wird.

Die Erfinder der vorliegenden Anmeldung haben nämlich erkannt, dass ein wesentliches Problem bei dem auf reiner Temperaturmessung beruhenden, bekannten Kompensationsverfahren darin besteht, dass eine lediglich vom Maschinentyp abhängige Rechenregel verwendet wird, wobei diese Rechenregel nur einmal für den entsprechenden Maschinentyp bestimmt wird, es werden nicht einmal die individuellen Gegebenheiten der einzelnen Werkzeugmaschinen des entsprechenden Typs berücksichtigt.

Erfindungsgemäß wird nun jedoch eine Rechenregel verwendet, die nicht nur von dem Maschinentyp sondern auch von dem jeweiligen Bearbeitungsprozess abhängt, also von dem jeweiligen Werkstück und der Art seiner Bearbeitung.

Die Erfinder haben nämlich erkannt, dass der Temperaturgang einer Werkzeugmaschine nicht nur ein rein zeitlicher Prozess nach dem erstmaligen Einschalten der Werkzeugmaschine ist, sondern auch von der Art des jeweils durchgeführten Bearbeitungsprozesses abhängt. Auf diese Weise ist trotz einer nur geringen Anzahl von Messstellen eine genaue Kompensation thermischer Verlagerungen möglich, so dass auf die unmittelbare messtechnische Erfassung der tatsächlichen Verlagerungen verzichtet werden kann.

Umfangreiche Versuche in den Räumen der Anmelderin haben gezeigt, dass mit einer derart individualisierten Rechenregel eine Kompensation von thermischen Verlagerungen allein ausgehend von Temperaturwerten, die an verschiedenen Messstellenstellen an der Werkzeugmaschine erfasst sind, mit einer Genauigkeit erfolgen kann, die im Bereich dessen liegt, was durch eine unmittelbare messtechnische Erfassung der Verlagerungen möglich ist. Da bei dem neuen Verfahren jedoch auf die tatsächliche Messung der Verlagerungen verzichtet werden kann, ergibt sich bei hoher Genauigkeit auch ein hoher Werkstückdurchsatz. Die Temperaturmessungen können nämlich zeitgleich mit der Bearbeitung eines Werkstückes durchgeführt werden.

Die der Erfindung zugrunde liegende Aufgabe wird somit vollkommen gelöst.

Dabei ist es bevorzugt, wenn eine auf die individuelle Betriebssituation der Werkzeugmaschine abgestimmte Rechenregel verwendet wird.

Bei diese Maßnahme ist von Vorteil, dass nicht nur der jeweilige Bearbeitungsprozess sowie die Gegebenheiten der individuellen Werkzeugmaschine, sondern auch der Aufstellungsort und die dort vorherrschenden klimatischen Verhältnisse in die Bestimmung der Rechenregel mit eingehen. Erste Ergebnisse mit dem neuen Verfahren haben nämlich gezeigt, dass es unter Umständen nicht ausreichend ist, wenn in den Räumen der Anmelderin für eine neu produzierte Werkzeugmaschine die Rechenregel für einen entsprechenden Bearbeitungsprozess bestimmt wird, wenn die Werkzeugmaschine dann an einem völlig anderen Aufstellungsort zur Produktion eingesetzt wird.

Dabei ist es weiter bevorzugt, wenn die Rechenregel unter der aktuellen Betriebssituation für den jeweiligen Bearbeitungsprozess individuell bestimmt wird.

Hier ist von Vorteil, dass bei Aufnahme eines neuen Bearbeitungsprozesses oder bei einer geänderten Betriebssituation, beispielsweise einem anderen Aufstellungsort oder einer anderen Jahreszeit, die Rechenregel vor Ort neu bestimmt wird. Damit wird sozusagen eine individualisierte Rechenregel bereitgestellt, die nicht nur den Maschinentyp und den jeweils durchzuführenden Bearbeitungsprozess, sondern auch die sonstige Betriebssituation der jeweiligen individuellen Werkzeugmaschine berücksichtigt.

Dabei ist es bevorzugt, wenn die Rechenregel bestimmt wird, indem während der tatsächlichen Durchführung eines Bearbeitungsprozesses die temperaturabhängigen tatsächlichen Verlagerungen unmittelbar messtechnisch erfasst werden.

Bei dieser Maßnahme ist von Vorteil, dass die Rechenregel sozusagen vor Ort bestimmt wird, indem der Bearbeitungsprozess durchgeführt und jeweils die Verlagerung und die aktuelle Temperatur gemessen wird, woraus dann die Rechenregel bestimmt oder angepasst wird.

Mit anderen Worten, nach dem Aufstellen einer Werkzeugmaschine an ihren Betriebsort wird der Bearbeitungsprozess zunächst lediglich deshalb durchgeführt, um die Rechenregel für den Bearbeitungsprozess sowie die individuelle Betriebssituation zu bestimmen. Dazu wird der Bearbeitungsprozess wie in der späteren Serienproduktion durchgeführt, wobei an den verschiedenen Messstellen die Temperaturwerte erfasst werden. Zu bestimmten Zeiten während der Durchführung des Bearbeitungsprozesses wird die tatsächliche thermisch bedingte Verlagerung in der Werkzeugmaschine beispielsweise so bestimmt, wie es aus den eingangs erwähnten Druckschriften DE 42 38 504 oder US 5,581,467 bekannt ist. Auf diese Weise können bestimmte Parameter der Rechenregel für den jeweiligen Bearbeitungsprozess sowie die jeweilige Betriebssituation optimiert werden, wozu beispielsweise bekannte mathematische Verfahren wie die Methode der geringsten Fehlerquadrate verwendet werden.

Sobald die entsprechenden Parameter für die Rechenregel festgelegt wurden, startet der eigentliche Produktionsprozess, bei dem dann auf die messtechnische Erfassung der tatsächlichen Verlagerungen und somit auf einen Messstarter etc. verzichtet werden kann, denn der Temperaturgang der Werkzeugmaschine wird jetzt durch die Rechenregel hinreichend genau beschrieben. Die Rechenregel ist dabei so ausgelegt, dass unmittelbar nach dem Einschalten einer betriebskalten Werkzeugmaschine bereits Werkstücke mit hinreichender Genauigkeit produziert werden können. Wenn sich die Werkzeugmaschine dann im Verlaufe des Betriebes weiter erwärmt und somit größere Verlagerungen auftreten, werden diese mit Hilfe der Rechenregel ebenfalls kompensiert.

Dabei ist es weiter bevorzugt, wenn die Rechenregel während einer Warmlaufphase der Werkzeugmaschine bestimmt wird.

Unter einer Warmlaufphase wird dabei die Zeit vom erstmaligen Einschalten der betriebskalten Werkzeugmaschine bis zum Erreichen des thermisch eingeschwungenen Zustandes verstanden, was in der Regel mehrere Stunden dauert. Nach dem Einschalten einer betriebskalten Werkzeugmaschine erwärmt sich diese in Abhängigkeit von dem Bearbeitungsprozess, dem jeweiligen Standort und der aktuellen klimatischen Situation, so dass eine während des Verlaufes der Warmlaufphase bestimmte Rechenregel die Korrektur von thermischen Verlagerungen über dem der aktuellen Betriebssituation und dem aktuellen Bearbeitungsprozess entsprechenden Temperaturbereich ermöglicht.

Während dieser Warmlaufphase wird also bestimmt, welche thermischen Verlagerungen den jeweiligen Temperaturen an den verschiedenen Messstellen entsprechen und welche Korrekturwerte für welchen Satz von Temperaturwerten jeweils benötigt werden.

Aus diesen Daten wird dann am Ende der Warmlaufphase die Rechenregel bestimmt oder aktualisiert bzw. angepasst.

Dabei ist es besonders bevorzugt, wenn während der Bestimmung der Rechenregel in der Warmlaufphase die unmittelbar messtechnisch erfassten tatsächlichen Verlagerungen zur Bestimmung von Korrekturwerten eingesetzt werden, wobei diese Korrekturwerte dann aktuell im Bearbeitungsprozess verwendet werden.

Hier ist von Vorteil, dass auch schon die während der Bestimmung der Rechenregel in der ersten Warmlaufphase bearbeiteten Werkstücke hinreichend genau sind, so dass sie nicht verworfen oder nachgearbeitet werden müssen. Die zeitaufwendige unmittelbare messtechnische Erfassung ist nur ein Mal oder selten, beispielsweise bei Änderungen des Aufstellungsortes oder der klimatischen Verhältnisse, erforderlich, dennoch können jetzt auch während dieser Phase der Bestimmung der Rechenregel Werkstücke mit hinreichender Genauigkeit produziert werden. Dies ist insbesondere dann von Vorteil, wenn die Werkstücke aus einem sehr teuren Werkstoff hergestellt werden und/oder die Bearbeitung eines Werkstückes relativ lange dauert, so dass ein nicht zu vernachlässigender Produktionsausfall erfindungsgemäß vermieden werden kann.

Weiter ist es bevorzugt, wenn die unmittelbare messtechnische Erfassung der tatsächlichen Verlagerung während der Warmlaufphase zu in einem Messabstand zueinander folgenden Messzeitpunkten erfolgt, wobei der Messabstand in Abhängigkeit von der ermittelten Verlagerung verändert wird.

Hier ist von Vorteil, dass die Zeit für die Bestimmung der Rechenregel verkürzt werden kann, denn je näher sich die Werkzeugmaschine dem thermisch eingeschwungenen Zustand nähert, desto größer kann der Messabstand werden, was die Bearbeitungsgeschwindigkeit schon während der Bestimmung der Rechenregel erhöht.

Allgemein ist es bevorzugt, wenn an mehreren Messstellen an der Werkzeugmaschine Temperaturwerte gemessen werden, aus denen die Rechenregel den Korrekturwert bestimmt, wobei die Rechenregel vorzugsweise ein Polynom ist, das die Abhängigkeit des Korrekturwertes von den aktuell an den Messstellen gemessenen Temperaturwerten und zumindest einem Parameter beschreibt, wobei dieser Parameter von dem Bearbeitungsprozess abhängt.

Hier ist von Vorteil, dass die Rechenregel selbst relativ einfach aufgebaut ist, so dass nur der oder die Parameter jeweils für den aktuellen Bearbeitungsprozess und ggf. die aktuelle Betriebssituation bestimmt werden müssen.

Allgemein ist es bevorzugt, wenn die Werkzeugmaschine einen relativ zu dem Werkstücktisch verfahrbaren Fahrständer, einen an dem Fahrständer verfahrbaren und die Werkzeugspindel aufnehmenden Spindelkopf sowie eine Spänewanne zum Sammeln und Abführen von während des Bearbeitungsprozesses entstehenden Spänen aufweist, wobei an dem Fahrständer, dem Spindelkopf sowie der Spänewanne jeweils zumindest eine Messstelle vorgesehen ist.

Versuche bei der Anmelderin haben ergeben, dass bereits die an diesen drei Messstellen erfassten Temperaturwerte die Aufstellung einer Rechenregel ermöglichen, die an den jeweiligen Bearbeitungsprozess so angepasst werden kann, dass Werkstücke mit sehr großer Genauigkeit bearbeitet werden können.

Weitere Vorteile ergeben sich aus der Beschreibung und der beigefügten Zeichnung.

Die Erfindung wird jetzt anhand einer erfindungsgemäß mit Temperaturmessstellen ausgestatteten Werkzeugmaschine dargestellt, die in der einzigen Figur gezeigt ist.

In dieser Figur ist mit 10 eine Werkzeugmaschine bezeichnet, die ein Maschinengestell 11 aufweist, auf dem ein Fahrständer 12 in Richtung einer bei 14 angedeuteten X-Achse und in Richtung bei 15 angedeuteten Y-Achse verfahrbar ist.

An dem Fahrständer 12 ist ein in Richtung einer bei 16 angedeuteten Z-Achse verfahrbarer Spindelkopf 17 gelagert, der eine Werkzeugspindel 18 trägt, die an ihrem unteren Ende ein Werkzeug 19 hält. In an sich bekannter Weise können in die Werkzeugspindel 18 verschiedene Werkzeuge 19 eingewechselt werden.

Auf diese Weise ist die Werkzeugspindel 18 und damit das jeweilige Werkzeug 19 in den drei Achsen 14, 15, 16 relativ zu einem bei 21 angedeuteten Werkstücktisch verfahrbar, auf dem ein zu bearbeitendes Werkstück 22 angedeutet ist.

Neben dem Werkstück 22 ist auf dem Werkstücktisch 21 noch ein Messtaster 23 vorgesehen, der als Referenzpunkt für das Koordinatensystem dient.

Zwischen dem Werkstücktisch 21 und dem Fahrständer 12 ist noch eine Spänewanne 25 angedeutet, in der bei der Bearbeitung des Werkstückes 22 entstehende Späne 26 gesammelt und dann in einen Spänebehälter 27 abgeführt werden.

Die Fahranweisungen an den Fahrständer 12, den Spindelkopf 17 und die Werkzeugspindel 18 erfolgen über eine bei 29 angedeutete Ablaufsteuerung.

An dem Fahrständer 12 ist eine bei 31 angedeutete erste Messstelle für einen ersten Temperaturwert $T_1$ vorgesehen. An dem Spindelkopf 17 sind eine zweite sowie eine dritte Messstelle 32 bzw. 33 für einen zweiten bzw. dritten Temperaturwert $T_2$ bzw. $T_3$ vorgesehen. An der Spänewanne 25 schließlich ist eine vierte Messstelle 34 für einen vierten Temperaturwert $T_4$ angeordnet.

In der Ablaufsteuerung 29 ist ein Bearbeitungsprozess abgelegt, gemäß dem jetzt nacheinander Werkstücke 22 bearbeitet werden. Hierzu ist es erforderlich, dass verschiedene Werkzeuge 19 in die Werkzeugspindel 18 eingespannt und dann an verschiedene Positionen an dem Werkstück 22 gefahren werden, um dort beispielsweise Fräs- oder Bohrarbeiten durchzuführen. Zu diesem Zweck enthält das Bearbeitungsprogramm Koordinatensätze $(X_s, Y_s, Z_s)$, die der jeweiligen Sollposition des Werkzeuges 19 für eine Temperatur $T_0$ entsprechen.

Sofern die Werkzeugmaschine auf einem einheitlichen Temperaturniveau $T_0$ ist, erfolgen keine thermischen Verlagerungen und der Bearbeitungsprozess kann ohne Korrektur der Fahrbefehle durchgeführt werden. Dies ist jedoch ein nicht erreichbarer Idealzustand, denn aufgrund unterschiedlicher Erwärmungen nach dem Einschalten der Werkzeugmaschine sowie im Verlauf der Bearbeitungsprozesse befinden sich verschiedene Teile der Werkzeugmaschine immer wieder auf unterschiedlichen Temperaturen. Um die dadurch bedingten thermischen Verlagerungen zu korrigieren, werden die Fahrbefehle der Werkzeugmaschine um Korrekturwerte $\Delta X$, $\Delta Y$ und $\Delta Z$ korrigiert.

$$X = X_s + \Delta X$$

$$Y = Y_s + \Delta Y$$

$$Z = Z_s + \Delta Z$$

Die Korrekturwerte $\Delta X$, $\Delta Y$ und $\Delta Z$ werden wie folgt in Abhängigkeit von den vier gemessenen Temperaturen $T_1$, $T_2$, $T_3$ und $T_4$ berechnet:

$$\Delta X = A_x \Delta T_1 + B_x \Delta T_2 + C_x \Delta T_3 + D_x \Delta T_4$$

$$\Delta Y = A_y \Delta T_1 + B_y \Delta T_2 + C_y \Delta T_3 + D_y \Delta T_4$$

$$\Delta Z = A_z \Delta T_1 + B_z \Delta T_2 + C_z \Delta T_3 + D_z \Delta T_4$$

Bei dieser Rechenregel handelt es sich um ein Polynom erster Ordnung.

Die Bestimmung von ΔX, ΔY und ΔZ erfolgt über die obige Rechenregel, in der die Parametersätze $A_x$, $B_x$, $C_x$, $D_x$; $A_y$, $B_y$, $C_y$, $D_y$ und $A_z$, $B_z$, $C_z$, $D_z$ individuell für den jeweiligen Bearbeitungsprozess sowie die jeweilige Betriebssituation bestimmt worden sind.

Sobald diese Parametersätze bestimmt sind, können anhand der an den Messstellen 31, 32, 33 und 34 bestimmten Temperaturwerte $T_1$, $T_2$, $T_3$ und $T_4$ sowie anhand von deren Abweichung zu einer Referenztemperatur $T_0$ die Korrekturwerte ΔX, ΔY und ΔZ berechnet werden. Dabei gilt:

$$\Delta T_1 = T_0 - T_1$$

$$\Delta T_2 = T_0 - T_2$$

$$\Delta T_3 = T_0 - T_3$$

$$\Delta T_4 = T_0 - T_4$$

$T_0$ kann dabei die an einem weiteren Messpunkt gemessene Temperatur sein, oder ein vorgegebener Wert wie beispielsweise 23°C, zu dem folglich die Korrekturwerte ΔX, ΔY und ΔZ gleich Null sind. Es ist aber auch möglich, den als erstes gemessenen Temperaturwert als $T_0$ zu nehmen. Ferner kann $T_0$ für jeden Messpunkt individuell bestimmt sein.

Die Parametersätze werden nun jedoch nicht lediglich für den Maschinentyp bestimmt, sie werden vielmehr "vor Ort" für den jeweiligen Bearbeitungsprozess und die jeweilige Betriebssituation ermittelt. Auf diese Weise ist es nach Erkenntnis der Erfinder der vorliegenden Anmeldung möglich, über einen breiten Temperaturbereich Korrekturwerte ΔX, ΔY und ΔZ zu bestimmen, die eine sehr genaue Bearbeitung der Werkstücke 22 ermöglichen.

Die Bestimmung der Rechenregel erfolgt jetzt derart, dass eine betriebskalte Werkzeugmaschine eingeschaltet und auf ihr Werkstücke 22 dem Bearbeitungsprozess unterworfen werden, wobei solange Werkstücke 22 bearbeitet werden, bis die Werkzeugmaschine ihre Warmlaufphase beendet hat, also im thermisch einigermaßen eingeschwungenen Zustand ist.

Während dieser Phase der Bestimmung der Rechenregel kommt der in der Figur gezeigte Messtaster 23 zum Einsatz, der dazu dient, während des Ablaufes der Bearbeitungsprozesse immer wieder die aktuelle thermische Verlagerung messtechnisch zu erfassen, wie dies beispielsweise in der eingangs erwähnten DE 42 38 504 A1 ausführlich beschrieben ist.

Zu diesem Zweck wird ein Messwerkzeug in die Werkzeugspindel 18 eingewechselt und dann der Messtaster 23 angefahren. Wenn der Messtaster 23 anspringt, wird die tatsächliche Position des Messtasters 23 mit der bei der Temperatur $T_0$ ermittelten Position verglichen und daraus die tatsächliche Verlagerung ΔX, ΔY und ΔZ bestimmt. Zu diesem Satz von Verlagerungen werden auch die Temperaturwerte $T_1$, $T_2$, $T_3$ und $T_4$ bestimmt.

Während der Warmlaufphase werden so über einer Zeit von beispielsweise vier Stunden die Verlagerungen ΔX, ΔY und ΔZ für verschiedene Sätze der Temperaturwerte $T_1$, $T_2$, $T_3$ und $T_4$ gemessen, woraus dann nach üblichen mathematischen Verfahren die Parametersätze $A_x$, $B_x$, $C_x$, $D_x$; $A_y$, $B_y$, $C_y$, $D_y$ und $A_z$, $B_z$, $C_z$, $D_z$ bestimmt werden. Hierfür bietet sich beispielsweise die Methode der geringsten Fehlerquadrate an.

Diese Parametersätze spiegeln jetzt die thermischen Verlagerungen der Werkzeugmaschine 10 über den während der Warmlaufphase durchlaufenen Temperaturbereich derart genau wieder, dass mit ihrer Hilfe für die jeweils aktuell gemessenen Temperaturwerte $T_1$, $T_2$, $T_3$ und $T_4$ die Korrekturwerte ΔX, ΔY und ΔZ so genau berechnet werden können, dass die Werkstücke 22 sehr genau bearbeitet werden können.

Um auch die während der Bestimmung der Rechenregel bzw. der Parametersätze bearbeiteten Werkstücke verwenden zu können, werden die während dieser Zeit messtechnisch erfassten Korrekturwerte ΔX, ΔY und ΔZ jeweils verwendet, um die Fahrbefehle der Maschinensteuerung 29 zu kompensieren. Auf diese Weise wird verhindert, dass die während der Bestimmung der Rechenregel bearbeiteten Werkstücke verworfen oder nachgearbeitet werden müssen.

Um den Durchsatz der Werkstücke 22 während der Bestimmung der Rechenregel zu erhöhen, kann es weiter vorgesehen sein, die Zeitabstände, zu denen die tatsächliche aktuelle Lage des Referenzpunktes mit dem Messtaster 23 erfasst wird, in Abhängigkeit von der Änderung der Korrekturwerte ΔX, ΔY, ΔZ so anzupassen, wie dies beispielsweise in der eingangs erwähnten US 5,581,467 beschrieben ist. Je weiter sich die Werkzeugmaschine 10 dem thermisch eingeschwungenen Zustand nähert, desto geringer wird die Abweichung zwischen aufeinander folgend gemessenen Korrekturwerten $\Delta X$, $\Delta Y$ und $\Delta Z$ sein, so dass die Abstände zwischen den einzelnen tatsächlichen Messungen immer weiter vergrößert werden können.

Nachdem auf diese Weise die Rechenregel einmal für einen bestimmten Bearbeitungsprozess sowie eine bestimmte Betriebssituation bestimmt wurde, können Werkstücke 22 jetzt nach dem betreffenden Bearbeitungsprozess bereits unmittelbar nach dem morgendlichen Einschalten einer Werkzeugmaschine mit hinreichender Genauigkeit erzeugt werden. Die thermischen Verlagerungen bei der allmählichen Aufwärmung der Werkzeugmaschine während des Betriebes werden durch die Rechenregel hinreichend kompensiert. Die Rechenregel erfasst auch ein zwischenzeitliches Abkühlen der Werkzeugmaschine beispielsweise während einer Stillstandszeit infolge einer Arbeitsunterbrechung oder eine Abkühlung durch kurzfristiges Öffnen einer Tür bzw. eine weitere Erwärmung durch Erhöhung der Außentemperatur.

Wenn die Werkzeugmaschine innerhalb der Produktionsstätte an einen anderen Aufstellungsort gebracht wird oder sich die klimatischen Verhältnisse ändern, weil es dort beispielsweise im Sommer deutlich heißer ist als im Winter, so kann es erforderlich sein, die Parametersätze für die Rechenregel erneut zu bestimmen.

Wenn die Werkzeugmaschine 10 im Laufe ihrer Lebensdauer zur Bearbeitung eines neues Werkstückes mit einem neuen Bearbeitungsprozess umgerüstet wird, so ist es dann erforderlich, die Rechenregel für diesen neuen Bearbeitungsprozess erneut zu bestimmen.

Mit dieser für den jeweiligen Bearbeitungsprozess und die jeweilige Betriebssituation individualisierten Rechenregel ist es möglich, Werkstücke mit einer Genauigkeit zu produzieren, wie es bisher nur möglich war, wenn während der Bearbeitung die aktuelle thermische Verlagerung messtechnisch immer wieder erfasst wurde, was mit entsprechenden Zeitverlusten verbunden war.

## Patentansprüche

1. Verfahren zur Kompensation von thermischen Verlagerungen bei einer Werkzeugmaschine (10) mit einem Werkstücktisch (21) zum Aufspannen von zu bearbeitenden Werkstücken (22) und mit einer relativ zu dem Werkstücktisch (21) in zumindest einer Achse (14, 15, 16) verfahrbaren Werkzeugspindel (18), in die Werkzeuge (19) einspannbar sind, mit denen an den Werkstücken (22) ein Bearbeitungsprozess durchgeführt wird, wobei aus zumindest einem an einer Messstelle (31, 32, 33, 34) an der Werkzeugmaschine (10) aktuell gemessenen Temperaturwert ($T_1$, $T_2$, $T_3$, $T_4$) nach einer Rechenregel zumindest ein Korrekturwert ($\Delta X$, $\Delta Y$, $\Delta Z$) für die zumindest eine Achse (14, 15, 16) berechnet wird, **dadurch gekennzeichnet, dass** eine auf den jeweiligen Bearbeitungsprozess abgestimmte Rechenregel verwendet wird.

2. Verfahren nach Anspruch 1, **dadurch gekennzeichnet, dass** eine auf die individuelle Betriebssituation der Werkzeugmaschine 10 abgestimmte Rechenregel verwendet wird.

3. Verfahren nach Anspruch 2, **dadurch gekennzeichnet, dass** die Rechenregel unter der aktuellen Betriebssituation für den jeweiligen Bearbeitungsprozess individuell bestimmt wird.

4. Verfahren nach einem der Ansprüche 1 bis 3, **dadurch gekennzeichnet, dass** die Rechenregel bestimmt wird, indem während der tatsächlichen Durchführung eines Bearbeitungsprozesses die temperaturabhängigen tatsächlichen Verlagerungen unmittelbar messtechnisch erfasst werden.

5. Verfahren nach Anspruch 4, **dadurch gekennzeichnet, dass** die Rechenregel während einer Warmlaufphase der Werkzeugmaschine (10) bestimmt wird.

6. Verfahren nach Anspruch 5, **dadurch gekennzeichnet, dass** während der Bestimmung der Rechenregel in der Warmlaufphase die unmittelbar messtechnisch erfassten tatsächlichen Verlagerungen zur Bestimmung von Korrekturwerten eingesetzt werden, wobei diese Korrekturwerte dann aktuell im Bearbeitungsprozess verwendet werden.

7. Verfahren nach Anspruch 6, **dadurch gekennzeichnet, dass** die unmittelbare messtechnische Erfassung der tatsächlichen Verlagerungen während der Warmlaufphase zu in einem Messabstand zueinander folgenden Messzeitpunkten erfolgt, wobei der Messabstand in Abhängigkeit von der ermittelten Verlagerung verändert wird.

8. Verfahren nach einem der Ansprüche 1 bis 7, **dadurch gekennzeichnet, dass** an mehreren Messstellen (31, 32, 33, 34) an der Werkzeugmaschine (10) Temperturwerte ($T_1$, $T_2$, $T_3$, $T_4$) gemessen werden, aus denen die Rechenregel den Korrekturwert ($\Delta X$, $\Delta Y$, $\Delta Z$) berechnet.

9. Verfahren nach einem der Ansprüche 1 bis 8, **dadurch gekennzeichnet, dass** die Rechenregel ein Polynom ist, das die Abhängigkeit des Korrekturwertes ($\Delta X$, $\Delta Y$, $\Delta Z$) von dem aktuell an der Messstelle (31, 32, 33, 34) gemessenen Temperaturwert ($T_1$, $T_2$, $T_3$, $T_4$) und zumindest einem Parameter (A, B, C, D) beschreibt, wobei der Parameter (A, B, C, D) von dem Bearbeitungsprozess abhängt.

10. Verfahren nach einem der Ansprüche 1 bis 9, **dadurch gekennzeichnet, dass** die Werkzeugmaschine (10) einen relativ zu dem Werkstücktisch (21) verfahrbaren Fahrständer (12), einen an dem Fahrständer (12) verfahrbaren und die Werkzeugspindel (18) aufnehmenden Spindelkopf (17) sowie eine Spänewanne (25) zum Sammeln und Abführen von während des Bearbeitungsprozesses entstehenden Spänen (26) aufweist, wobei an dem Fahrständer (12), dem Spindelkopf (17) sowie der Spänewanne (25) jeweils zumindest eine Messstelle (31; 32, 33; 34) vorgesehen ist.

## Claims

1. Method for compensating thermal displacements in the case of a machine tool (10) having a worktable (21) for mounting workpieces (22) to be machined and having a tool spindle (18), which can be moved relative to the worktable (21) in at least one axis (14, 15, 16) and into which tools (19) can be clamped for performing a machining process on the workpieces (22), whereby a calculating rule is used to calculate from at least one temperature value ($T_1$, $T_2$, $T_3$, $T_4$) currently measured at a measuring point (31, 32, 33, 34) on the machine tool (10) at least one correction value ($\Delta X$, $\Delta Y$, $\Delta Z$) for the at least one axis (14, 15, 16), **characterized in that** a calculating rule, adjusted to the respective machining process, is applied.

2. Method according to claim 1, **characterized in that** a calculating rule, adjusted to the individual operating situation of the machine tool (10), is applied.

3. Method according to claim 2, **characterized in that** the calculating rule is determined individually for the respective machining process in the current operating situation.

4. Method according to anyone of claims 1 to 3, **characterized in that** the calculating rule is determined by directly measuring the temperature-dependent actual displacements while a machining process is actually being carried out.

5. Method according to claim 4, **characterized in that** the calculating rule is determined during a warm-up phase of the machine tool (10).

6. Method according to claim 5, **characterized in that** the directly measured actual displacements are used during the determination of the calculating rule in the warm-up phase to determine correction values, these correction values then currently being used in the machining process.

7. Method according to claim 6, **characterized in that** the direct measurement of the actual displacements during the warm-up phase is performed at measuring instances following one another at a measuring interval, the measuring interval being varied as a function of the displacement determined.

8. Method according to anyone of claims 1 to 7, **characterized in that** temperature values ($T_1$, $T_2$, $T_3$, $T_4$) from which the calculating rule calculates the correction value ($\Delta X$, $\Delta Y$, $\Delta Z$) are measured at a number of measuring points (31, 32, 33, 34) on the machine tool (10).

9. Method according to anyone of claims 1 to 8, **characterized in that** the calculating rule is a polynomial that describes the dependence of the correction value ($\Delta X$, $\Delta Y$, $\Delta Z$) on the temperature value ($T_1$, $T_2$, $T_3$, $T_4$) currently measured at the measuring point (31, 32, 33, 34) and of at least one parameter (A, B, C, D), the parameter (A, B, C, D) being a function of the machining process.

10. Method according to anyone of claims 1 to 9, **characterized in that** the machine tool (10) has a moving column (12) which can be traversed relative to the worktable (21), a spindle head (17) that can be traversed on the travelling column (12) and holds the tool spindle (18), and a chip trough (25) for collecting and removing chips (26) produced during the machining process, at least one measuring point (31, 32, 33, 34) respectively being provided at the travelling column (12), the spindle head (17) and the chip trough (25).

**Revendications**

1. Procédé de compensation de transferts thermiques dans une machine-outil (10) comportant une table à pièces (21) destinée au montage de pièces à usiner (22) et une broche à outils (18) déplaçable par rapport à la table à pièces (21) dans au moins un axe (14, 15, 16) et dans laquelle peuvent être montés des outils (19) à l'aide desquels un processus d'usinage est réalisé au niveau des pièces (22), au moins une valeur de correction ($\Delta X$, $\Delta Y$, $\Delta Z$) pouvant être calculée d'après une règle de calcul pour l'au moins un axe (14, 15, 16) à partir d'au moins une valeur de température ($T_1$, $T_2$, $T_3$, $T_4$) mesurée de manière actuelle à un point de mesure (31, 32, 33, 34) de la machine-outil (10), **caractérisé en ce qu'**une règle de calcul établie en fonction du processus d'usinage respectif est utilisée.

2. Procédé selon la revendication 1, **caractérisé en ce qu'**une règle de calcul établie en fonction de la situation de fonctionnement individuelle de la machine-outil (10) est utilisée.

3. Procédé selon la revendication 2, **caractérisé en ce que** la règle de calcul est établie individuellement dans la situation de fonctionnement actuelle pour le processus d'usinage respectif.

4. Procédé selon l'une quelconque des revendications 1 à 3, **caractérisé en ce que** la règle de calcul est définie en enregistrant directement par technique de mesure, pendant la réalisation réelle d'un processus d'usinage, les transferts réels dépendant de la température.

5. Procédé selon la revendication 4, **caractérisé en ce que** la règle de calcul est définie pendant une phase de mise en température de la machine-outil (10).

6. Procédé selon la revendication 5, **caractérisé en ce que**, pendant la définition de la règle de calcul dans la phase de mise en température, les transferts réels enregistrés directement par technique de mesure sont utilisés pour définir des valeurs de correction, ces valeurs de correction étant ensuite utilisées de manière actuelle dans le processus d'usinage.

7. Procédé selon la revendication 6, **caractérisé en ce que** l'enregistrement direct par technique de mesure des transferts réels pendant la phase de mise en température a lieu à des instants de mesure successifs dans un intervalle de mesure, l'intervalle de mesure étant modifié en fonction du transfert déterminé.

8. Procédé selon l'une quelconque des revendications 1 à 7, **caractérisé en ce qu'**à plusieurs points de mesure (31, 32, 33, 34) de la machine-outil (10), des valeurs de température ($T_1$, $T_2$, $T_3$, $T_4$) sont mesurées, valeurs à partir desquelles la règle de calcul de la valeur de correction ($\Delta X$, $\Delta Y$, $\Delta Z$) est calculée.

9. Procédé selon l'une quelconque des revendications 1 à 8, **caractérisé en ce que** la règle de calcul est un polynôme qui décrit la dépendance de la valeur de correction ($\Delta X$, $\Delta Y$, $\Delta Z$) par rapport à la valeur de température ($T_1$, $T_2$, $T_3$, $T_4$) mesurée de manière actuelle au point de mesure (31, 32, 33, 34) et à au moins un paramètre (A, B, C, D), le paramètre (A, B, C, D) dépendant du processus d'usinage.

10. Procédé selon l'une quelconque des revendications 1 à 9, **caractérisé en ce que** la machine-outil (10) présente un bâti mobile (12) déplaçable par rapport à la table porte-pièces (21), une tête de broche (17) déplaçable au niveau du bâti mobile (12) et recevant la broche à outils (18) ainsi qu'un bac à copeaux (25) destiné à collecter et à évacuer les copeaux (26) formés pendant le processus d'usinage, respectivement au moins un point de mesure (31 ; 32, 33 ; 34) étant prévu au niveau du bâti mobile (12), de la tête de broche (17) ainsi que du bac à copeaux (25).

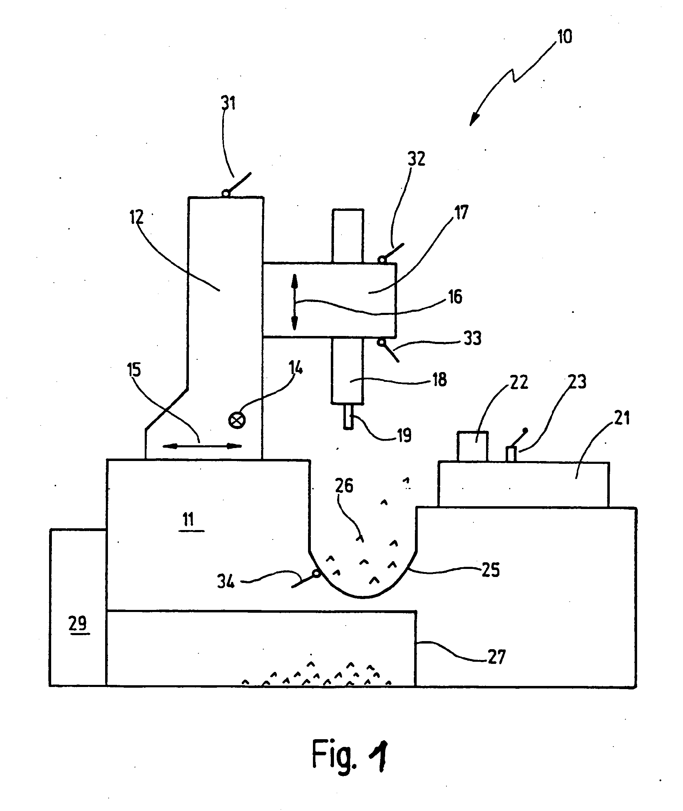

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4203994 A1
- US 5581467 A
- DE 4238504 A1
- DE 4238504